# EUROPÄISCHE PATENTANMELDUNG

(11) **EP 2 987 779 A1**
(43) Veröffentlichungstag der Anmeldung: **24.02.2016**
(21) Anmeldenummer: 15179824.6
(22) Anmeldetag: 05.08.2015
(51) Int. Cl.: C04B 35/524, C04B 35/565, C04B 35/571, C04B 35/573, C04B 35/80, B01F 5/06, B28B 1/00, B29C 67/00, F23D 14/16, H05B 3/14, H05B 3/42

(54) **VERFAHREN ZUR HERSTELLUNG EINES KERAMISCHEN FORMKÖRPERS SOWIE KERAMISCHE FORMKÖRPER**

(30) Priorität: 19.08.2014 DE 102014216433
(71) Anmelder: Schunk Kohlenstofftechnik GmbH, 35452 Heuchelheim (DE)
(72) Erfinder: Weiß, Roland, 35625 Hüttenberg (DE); Schönfeld, Jeremias, 35625 Hüttenberg (DE); Nauditt, Gotthard, 35625 Hüttenberg (DE)
(74) Vertreter: advotec.

(57) **Zusammenfassung**

Die Erfindung betrifft ein Verfahren zur Herstellung eines Formkörpers sowie einen Formkörper mit einer Siliziumcarbid-Stützmatrix und einer integralen Kohlenstoffstruktur, wobei ein Basiskörper auf Basis einer Siliziumcarbid oder Silizium und Kohlenstoff enthaltenden Pulvermischung und eines Binders in einem generativen Verfahren schichtweise aufgebaut wird, und zur Ausbildung des Formkörpers nach Aushärtung des Binders eine Pyrolyse des Basiskörpers erfolgt, wobei der Kohlenstoffgehalt der Kohlenstoffstruktur durch die Pyrolyse des Binders und den Kohlenstoffgehalt der Pulvermischung oder Infiltration eines Kohlenstoffmaterials in die Siliziumcarbid-Stützmatrix eingestellt wird.

## Beschreibung

Die vorliegende Erfindung betrifft ein Verfahren zur Herstellung eines Formkörpers mit einer Siliziumcarbid-Stützmatrix und einer integralen Kohlenstoffstruktur, wobei ein Basiskörper auf Basis einer Siliziumcarbid oder Silizium und Kohlenstoff enthaltenen Pulvermischung und eines Binders in einem generativen Verfahren schichtweise aufgebaut wird, und zur Ausbildung des Formkörpers nach Aushärtung des Binders eine Pyrolyse des Basiskörpers erfolgt, wobei der Kohlenstoffgehalt der Kohlenstoffstruktur durch die Pyrolyse des Binders und den Kohlenstoffgehalt der Pulvermischung oder Infiltration eines Kohlenstoffmaterials in die Siliziumcarbid-Stützmatrix eingestellt wird.

Verfahren bei denen basierend auf einem pulvrigen oder körnigen Material und eines Binders Formkörper hergestellt werden, sind auch unter dem Begriff 3D-Druckverfahren bekannt, zu deren Ausführung beispielsweise Laserdruck- oder sogenannte "Multi-Jet-Modeling"-Einrichtungen verwendet werden, um basierend auf vorgegebenen Konstruktionsdaten, den Formkörper schichtweise aufzubauen.

In diesem Zusammenhang ist es auch bekannt, ein Basismaterial, das zum Aufbau des Basiskörpers dient, mit einem Binder zu versehen der beispielsweise als Phenolharz ausgeführt ist und nach Aushärtung die Formhaltigkeit des Formkörpers gewährleistet.

Der vorliegenden Erfindung liegt die Aufgabe zugrunde, ein Verfahren zur Herstellung eines Formkörpers vorzuschlagen, der einerseits eine hohe mechanische Stabilität aufweist und andererseits in seinen elektrischen oder tribologischen Eigenschaften einstellbar ist.

Zur Lösung dieser Aufgabe wird ein Verfahren mit den Merkmalen des Anspruchs 1 vorgeschlagen.

Das erfindungsgemäße Verfahren ermöglicht die Herstellung eines Formkörpers mit einer Siliziumcarbid-Stützmatrix und einer integralen Kohlenstoffstruktur, der aufgrund der Siliziumcarbid-Stützmatrix eine hohe mechanische Stabilität aufweist und aufgrund der integral ausgebildeten Kohlenstoffstruktur in seinen elektrischen oder tribologischen Eigenschaften einstellbar ist.

Erfindungsgemäß wird zunächst auf Basis einer Siliziumcarbid oder Silizium und Kohlenstoff enthaltenen Pulvermischung und eines Binders in einem generativen Verfahren ein Basiskörper aufgebaut, der in einem nachfolgenden Verfahrensschritt zur Ausbildung des Formkörpers pyrolysiert wird, so dass der Kohlenstoffgehalt der Kohlenstoffstruktur durch den durch Pyrolyse des Binders entstandenen Pyrokohlenstoff, den Kohlenstoffgehalt der Pulvermischung und/oder gegebenenfalls Infiltration mit einem weiteren Kohlenstoffmaterial eingestellt wird.

Unter dem Begriff Kohlenstoffgehalt ist im Sinne der Erfindung der die Kohlenstoffstruktur ausbildende freie, also ungebundene Kohlenstoff in seiner Gesamtheit zu verstehen..

Vorzugsweise weist die Pulvermischung einen Kohlenstoffgehalt zwischen 0 und 30 Gew.-% auf, wobei für den Fall, dass die Pulvermischung lediglich einen relativ geringen Anteil an Siliziumcarbid oder gar kein Siliziumcarbid aufweist, der Kohlenstoffgehalt der Pulvermischung eher im Bereich der oberen Grenze des angegebenen Bereichs liegt.

Besonders bevorzugt ist es, wenn die Pulvermischung einen Kohlenstoffgehalt zwischen 10 und 20 Gew.-% aufweist.

Wenn die Pulvermischung eine SiC-Partikel-Fraktion mit Partikeln einer mittleren Korngröße Dₛ₅₀ zwischen 0,5 und 100 µm aufweist, wird eine besonders gute Durchmischung der Pulvermischung erreicht. Darüber hinaus sind die gewünschten physikalischen Eigenschaften des Formkörpers gut einstellbar.

Besonders gute Ergebnisse sind erzielbar, wenn die mittlere Korngröße Dₛ₅₀ zwischen 2 und 60 µm beträgt.

Wenn zur Einstellung des Kohlenstoffgehalts des Formkörpers nachfolgend der Pyrolyse des Basiskörpers die Infiltration der Siliziumcarbid-Stützmatrix mit einem als Polymer ausgebildeten Kohlenstoffmaterial erfolgt, das mittels einer nachfolgenden Pyrolyse in Kohlenstoff umgewandelt wird, kann gleichzeitig gegebenenfalls noch in der Siliziumcarbid-Stützmatrix vorhandenes freies Silizium zur Verstärkung der Stützmatrix in Siliziumcarbid umgewandelt und überschüssiger Pyrokohlenstoff zur Ausbildung der Kohlenstoffstruktur verwendet werden.

Alternativ besteht natürlich auch die Möglichkeit den Kohlenstoff als Rußsuspension oder auch über eine Abscheidung von Kohlenstoff aus der Gasphase in den Basiskörper einzubringen und somit diesen mit Kohlenstoff zu infiltrieren.

Auch derartig eingebrachter Kohlenstoff kann teilweise in einem Reaktionsbrand mit freiem Silizium, das in der Siliziumcarbid-Stützmatrix enthalten ist, zur Verstärkung der Siliziumcarbid-Stützmatrix dienen und teilweise zum Aufbau der Kohlenstoffstruktur verwendet werden. Vorzugsweise werden als Polymer siliziumhaltige oder siliziumcarbidhaltige Polymere verwendet, wie beispielsweise Siloxane, Silazane, Carbosiloxane, Carbosilazane oder Carbosilane.

Alternativ oder in Kombination mit den vorstehend beispielhaft genannten Polymeren können auch Prepolymere verwendet werden, wie beispielsweise Polyimide und Cyanatesterharze.

Wenn als Polymere Phenolharze, Furanharze, Cyanatesterharze verwendet werden, ist es möglich diese Polymere gleichzeitig auch als Binder zum Aufbau des Basiskörpers zu verwenden.

Wenn gemäß einer weiteren vorteilhaften Variante des Verfahrens nachfolgend der Pyrolyse eine Infiltration der Siliziumcarbid-Stützmatrix mit Silizium erfolgt, kann gegebenenfalls in der Siliziumcarbid-Stützmatrix ausgebildeter freier Kohlenstoff durch nachfolgenden Reaktionsbrand zumindest anteilig in Siliziumcarbid umgewandelt werden, um eine Kohlenstoffstruktur mit dem gewünschten Gehalt an freiem Kohlenstoff zu erhalten.

Vorzugsweise erfolgt die Infiltration der Siliziumcarbid-Stützmatrix mit Siliziumcarbid durch Abscheidung von Siliziumcarbid aus der Gasphase, wobei, insbesondere in Abhängigkeit von der gewünschten Infiltrationstiefe, ein CVI- oder ein CVD-Verfahren eingesetzt werden kann.

Die nachfolgend der Pyrolyse durchgeführte weitere Infiltration der Siliziumcarbid-Stützmatrix mit Silizium oder Siliziumcarbid ermöglicht eine Kapselung der Kohlenstoffstruktur als Korrosionsschutz und mechanischen Schutz, wobei die Infiltration der Stützmatrix mit Silizium insbesondere durch Eintauchen des Formkörpers in flüssiges Silizium oder auch durch Anwendung des "Liquid-Silicon-Infiltration"-Verfahrens erfolgen kann.

Alternativ zur Infiltration mit Silizium oder auch zusätzlich zur Infiltration mit Silizium kann eine Infiltration mit der Stützmatrix mit Siliziumcarbid, vorzugsweise durch Abspaltung von Siliziumcarbid aus der Gasphase erfolgen. Je nach Bedarf kann diese weitergehende Kapselung in Siliziumcarbid durch Ausführung eines CVI- oder CVD-Verfahrens erfolgen, so dass im Falle des CVI-Verfahrens insbesondere ein tieferes Eindringen von Siliziumcarbid in die Stützmatrix ermöglicht wird, wohingegen die Anwendung des CVD-Verfahrens in stärkerem Maße den Aufbau eine die äußere Kontur des Formkörpers abkapselnden Siliziumcarbidschicht ermöglicht.

Der erfindungsgemäße Formkörper weist die Merkmale des Anspruchs 15 auf.

Erfindungsgemäß weist der Formkörper eine Siliziumcarbid-Stützmatrix und eine integrale Kohlenstoffstruktur mit einem auf Basis einer Siliziumcarbid oder Silizium und Kohlenstoff enthaltenen Pulvermischung und eines Binders in einem generativen Verfahren schichtweise aufgebauten Basiskörper auf. Wobei der Formkörper einen Kohlenstoffgehalt von 10 bis 30 Gewichtsprozent aufweist.

Der erfindungsgemäße Formkörper weist aufgrund der Siliziumcarbid-Stützmatrix eine hohe mechanische Stabilität auf und ist durch seinen Kohlenstoffgehalt in seinen elektrischen oder tribologischen Eigenschaften definiert. Dabei kann insbesondere über den Kohlenstoffgehalt, also den Anteil von freiem Kohlenstoff im Formkörper, der die integrale Kohlenstoffstruktur ausbildet, die elektrische Leitfähigkeit des Formkörpers eingestellt werden. Ebenso kann über den Kohlenstoffgehalt das Festschmierstoffverhalten des Formkörpers beeinflusst werden.

Vorzugsweise weist das den Formkörper ausbildende Material einen spezifischen Widerstand zwischen 150 und 800 µOhmm auf.

Besonders bevorzugt ist es, wenn das den Formkörper ausbildende Material einen spezifischen Widerstand zwischen 300 und 600 µOhmm aufweist.

In einer besonders bevorzugten Ausführungsform ist der Formkörper schalenförmig aufgebaut, so dass an den technischen Einsatz angepasste Ausführungen des Formkörpers möglich sind, also beispielsweise eine Ausführung als Lagerschale oder hülsenförmiges, elektrisch beheizbares Heizelement.

Eine poröse und dennoch besonders stabile Ausgestaltung ist möglich, wenn der Formkörper als Gitterstruktur ausgebildet ist.

Der erfindungsgemäße Formkörper zeichnet sich durch eine besonders vielseitige Verwendbarkeit aus, so dass der erfindungsgemäße Formkörper vorteilhaft als Widerstandsheizelement oder auch als statischer Mischer ausgebildet und verwendet werden kann, der insbesondere zur Homogenisierung von den statischen Mischer in Richtung einer Durchströmungsachse durchströmenden Medien einsetzbar ist. Derartige statische Mischer können beispielsweise als Verbrennungszone eines Porenbrenners eingesetzt werden, oder auch bei der Erzeugung von Synthesegasen.

Eine vorteilhafte Einsatzmöglichkeit des Formkörpers besteht auch bei Verwendung als Lagerkörper, wobei die Festschmierstoffeigenschaften der Kohlenstoffstruktur zum Einsatz kommen.

Nachfolgend wird eine bevorzugte Variante des Verfahrens sowie verschiedenen Ausführungsformen von mittels des Verfahrens hergestellten Formkörpern anhand der Zeichnungen näher erläutert.

Es zeigen:
- **Fig. 1** bis **3**: Einen als Widerstandsheizelement ausgebildeten Formkörper;
- **Fig. 2**: eine schematische Darstellung des Gefüges des in **Fig. 1** dargestellten Widerstandsheizelements;
- **Fig. 3**: eine Siliziumcarbid-Stützmatrix;
- **Fig. 4**: das in **Fig. 3** dargestellte Gefüge mit einem als Phenolharz ausgebildeten, in die Stützmatrix infiltrierten Polymer;
- **Fig. 5**: das in **Fig. 4** dargestellte Gefüge nach Durchführen einer Pyrolyse zur Umwandlung des Polymers in Pyrolyse-Kohlenstoff.
- **Fig. 6**: einen als statischen Mischer ausgebildeten Formkörper;
- **Fig. 7**: die Gitterstruktur des Formkörpers;
- **Fig. 8**: eine schematische Darstellung eines Verfahrens zur Herstellung eines Formkörpers.

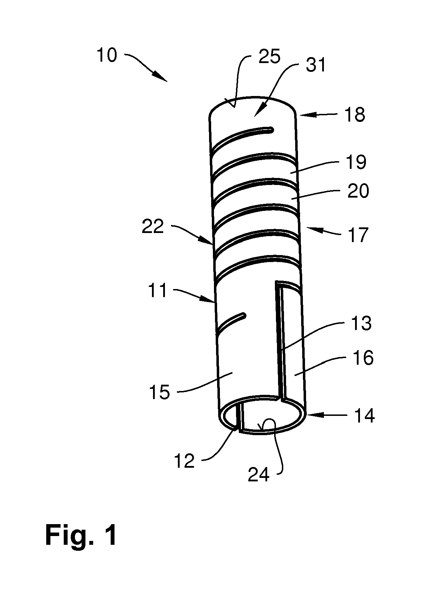

**Fig. 1** zeigt ein als "Tunnelheizer" ausgebildetes Widerstandsheizelement, welches rohrförmig, mit einem runden, kreisförmigen Querschnitt ausgebildet ist. Das Widerstandsheizelement weist einen Formkörper 22 mit einer dünnen Rohrwandung 11 auf, die durch zwei Schlitze 12 und 13 durchbrochen ist. Die Schlitze 12 und 13 sind im Bereich eines unteren Endes 14 des Widerstandsheizelements 10 in Längsrichtung desselben gerade ausgebildet und bilden so zwei Anschlussflächen 15 und 16 zum Anschluss des Widerstandsheizelements 10 an Anschlusskontakte einer hier nicht näher dargestellten Anschlussvorrichtung.

In einem Mittelbereich 17 des Formkörpers 22 verlaufen die Schlitze 12 und 13 jeweils spiralförmig in Längsrichtung entlang des Umfangs der Rohrwandung 11 bis hin zu einem oberen Ende 18 des Widerstandsheizelements. Die Schlitze 12 und 13 bilden so zwei Heizwendel 19 und 20 aus, die an dem oberen Ende in einem Ringabschnitt 32 miteinander verbunden sind. Eine Erwärmung des Widerstandsheizelements während eines Betriebs erfolgt im Wesentlichen im Bereich der Heizwendel 19 und 20. Das Widerstandsheizelement ist einstückig ausgebildet und besteht im Wesentlichen aus Siliziumcarbid und Kohlenstoff.

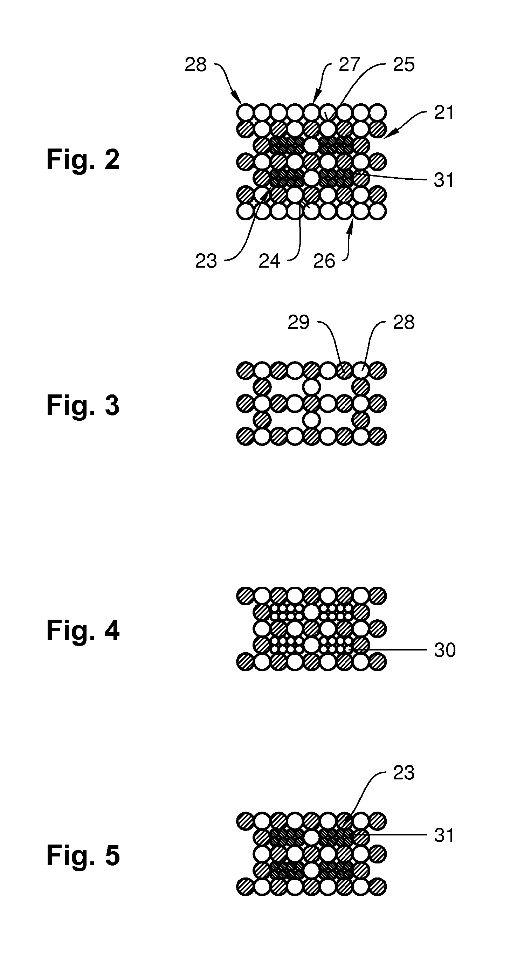

**Fig. 2** zeigt eine schematische vergrößerte Darstellung eines Ausschnitts aus einem Gefügeschnitt des in **Fig. 1** dargestellten Formkörpers 22. Das Gefüge weist eine Siliziumcarbid-Stützmatrix 21 auf, wobei in die Siliziumcarbid-Stützmatrix 21 eine Kohlenstoffstruktur 23 integriert ist. Eine innere Wandoberfläche 24 und eine äußere Wandoberfläche 25 ist mit einer Siliziumcarbid-Beschichtung 26 bzw. 27 versehen.

In den **Fig. 3 bis 5** werden anhand von Gefügedarstellungen beispielhaft die aufeinanderfolgenden Verfahrensschritte zur Herstellung des in **Fig. 2** dargestellten Gefüges des Formkörpers 22 erläutert.

**Fig. 3** zeigt das Gefüge eines Basiskörpers, der Siliziumcarbid-Partikel 28 aufweist, die über Bindemittel-Partikel 29 miteinander verbunden sind. Durch die ausgehärteten Bindemittel-Partikel 29 erhält der Basiskörper seine Formstabilität.

**Fig. 4** zeigt das Gefüge mit in die Siliziumcarbid-Stützmatrix 21 des Basiskörpers integrierten Polymer-Partikeln 30, die beispielsweise aus einem Phenolharz gebildet sind.

**Fig. 5** zeigt die nach einem Pyrolysevorgang in Kohlenstoff-Partikel 31 umgewandelten Polymer-Partikel 30, die in der Siliziumcarbid-Stützmatrix 21 die Kohlenstoffstruktur 23 ausbilden.

Abschließend erfolgt eine Beschichtung mit Siliziumcarbid-Partikeln 28 im CVD-Verfahren zur Ausbildung der in **Fig. 2** dargestellten Siliziumcarbid-Beschichtung 26 auf der inneren Wandoberfläche 24 und der Siliziumcarbid-Beschichtung 27 auf der äußeren Wandoberfläche 25 des Widerstandsheizelementes 10.

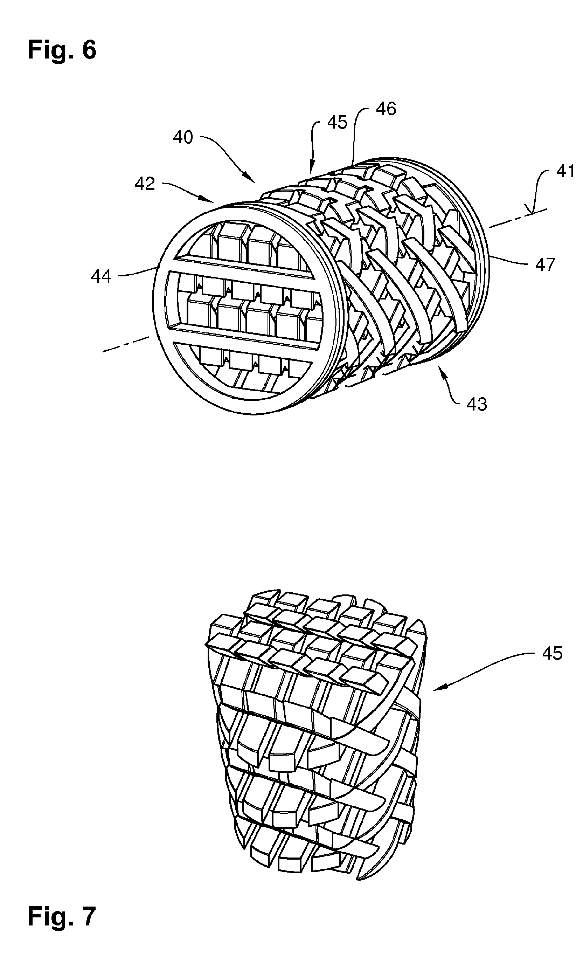

**Fig. 6** zeigt einen als statischen Mischer ausgebildeten Formkörper 40, der an seinen bezogen auf eine Durchströmungsachse 41 axialen Enden 42, 43 jeweils mit einer elektrischen Anschlusseinrichtung 44 versehen ist, die im vorliegenden Fall aus einem Graphitmaterial gebildet ist, und zur Einleitung bzw. Ableitung eines elektrischen Stroms in den Formkörper 40 dient.

Der als statischer Mischer ausgebildete Formkörper 40 weist eine dreidimensional ausgebildete Gitterstruktur 45 auf, die aus einander kreuzenden Materialstegen 46, 47 des Formkörpers 40 gebildet ist. Dabei erstrecken sich, wie insbesondere die **Fig. 7** zeigt, welche den Formkörper 40 ohne Anschlussrichtungen 44 darstellt, die Materialstege 46, 47 in einander durchdringenden Stegebenen 48, 49 angeordnet. Infolge des schichtweisen Aufbaus der Gitterstruktur 45 in einem generativen Verfahren, also etwa einem 3D-Druckverfahren, sind die Materialstege 46, 47 einstückig miteinander verbunden.

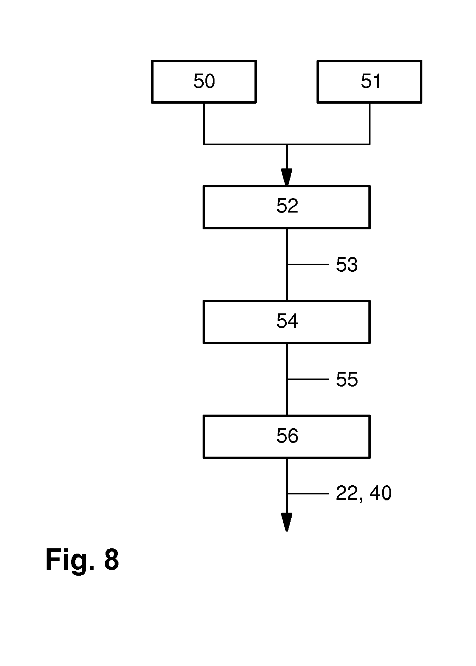

**Fig. 8** zeigt beispielhaft ein Verfahren zur Herstellung der in den **Fig. 1** und **6, 7** dargestellten Formkörper 22, 40, die beispielhaft als Widerstandsheizelement **(****Fig. 1****)** oder statischer Mischer **(****Fig. 6****)** ausgeführt sind.

Das in **Fig. 8** dargestellte Verfahren geht aus von der Herstellung einer Pulvermischung 50, die als Anteile Siliziumcarbid oder Silizium und Kohlenstoff oder Siliziumcarbid und Silizium und Kohlenstoff aufweisen kann und der als Binder 51 ein kohlenstoffhaltiges Kunstharz, wie beispielsweise Phenolharz zugegeben wird, sodass anschließend in einer Homogenisierungsstufe 52 eine homogenisierte Mischung 53 hergestellt wird, die einer 3D-Druckeinrichtung 54 zugeführt wird und von dieser in einem schichtweisen Aufbau zu einem Basiskörper 55 ausgebildet wird, der nach Aushärtung in einem Ofengang einer Pyrolyse 56 unterzogen wird. Infolge der Pyrolyse wandelt sich der Binder 51 in Kohlenstoff um und etwaige Anteile der Pulvermischung 50 von Kohlenstoff und Silizium werden durch einen Reaktionsbrand ebenfalls in Siliziumcarbid umgewandelt.

Ergebnis der Pyrolyse ist ein mechanisch stabiler Formkörper 22, 40, dessen eine Kohlenstoffstruktur ausbildender Anteil an freiem Kohlenstoff durch die Zusammensetzung der Pulvermischung 50 bzw. durch einen Restanteil an freiem Kohlenstoff bestimmt ist, der nach einem Reaktionsbrand von Silizium und Kohlenstoff verbleibt.

Gegebenenfalls an der Oberfläche des Formkörpers 22, 40 verbliebene freie Kohlenstoffanteile, die nicht in der Siliziumcarbid-Stützmatrix gekapselt vorliegen, können in einem anschließenden, gegebenenfalls in einem weiteren Ofengang durchgeführten Reaktionsbrand nach Infiltration mit Silizium in Siliziumcarbid umgewandelt werden.

Um auszuschließen, dass nach dem Reaktionsbrand freies Silizium in der Siliziumcarbid-Stützmatrix oder an der Oberfläche des Formkörpers vorhanden ist, kann in einem weiteren Ofengang das freie Silizium in einer Vakuumatmosphäre abgedampft werden.

## Patentansprüche

1. Verfahren zur Herstellung eines Formkörpers (22, 40) mit einer Siliziumcarbid-Stützmatrix (21) und einer integralen Kohlenstoffstruktur (23), wobei ein Basiskörper auf Basis einer Siliziumcarbid oder Silizium und Kohlenstoff enthaltenden Pulvermischung (50) und eines Binders (51) in einem generativen Verfahren schichtweise aufgebaut wird,
und zur Ausbildung des Formkörpers nach Aushärtung des Binders eine Pyrolyse (56) des Basiskörpers erfolgt,
wobei der Kohlenstoffgehalt der Kohlenstoffstruktur durch die Pyrolyse des Binders und den Kohlenstoffgehalt der Pulvermischung oder Infiltration eines Kohlenstoffmaterials in die Siliziumcarbid-Stützmatrix eingestellt wird.

2. Verfahren nach Anspruch 1,
**dadurch gekennzeichnet,**
**dass** die Pulvermischung (50) einen Kohlenstoffgehalt zwischen 0 und 30 Gew.-% aufweist.

3. Verfahren nach Anspruch 2,
**dadurch gekennzeichnet,**
**dass** die Pulvermischung (50) einen Kohlenstoffgehalt zwischen 10 und 20 Gew.-% aufweist.

4. Verfahren nach einem der vorangehenden Ansprüche,
**dadurch gekennzeichnet,**
**dass** die Pulvermischung (50) eine SiC-Partikel-Fraktion mit Partikeln einer mittleren Korngröße Dₛ₅₀ zwischen 0,5 und 100 µm aufweist.

5. Verfahren nach Anspruch 4,
**dadurch gekennzeichnet,**
**dass** die mittlere Korngröße Dₛ₅₀ zwischen 2 und 60 µm beträgt.

6. Verfahren nach Anspruch 5,
**dadurch gekennzeichnet,**
**dass** die mittlere Korngröße Dₛ₅₀ zwischen 3 und 10 µm beträgt.

7. Verfahren nach einem der vorangehenden Ansprüche,
**dadurch gekennzeichnet,**
**dass** zur Einstellung des Kohlenstoffgehaltes des Formkörpers (22, 40) nachfolgend der Pyrolyse (56) des Basiskörpers die Infiltration der Siliziumcarbid-Stützmatrix (21) mit einem Polymer erfolgt, das mittels einer nachfolgenden Pyrolyse in Kohlenstoff umgewandelt wird.

8. Verfahren nach Anspruch 7,
**dadurch gekennzeichnet,**
**dass** als Polymer siliziumhaltige oder siliziumcarbidhaltige Polymere, wie insbesondere Siloxane, Silazane, Carbosiloxane, Carbosilazane, Carbosilane, verwendet werden.

9. Verfahren nach Anspruch 7,
**dadurch gekennzeichnet,**
**dass** als Polymer Prepolymere, wie insbesondere Polyimide, Cyanatesterharze, verwendet werden.

10. Verfahren nach Anspruch 7,
**dadurch gekennzeichnet,**
**dass** als Polymer Phenolharze, Furanharze, Cyanatesterharze verwendet werden.

11. Verfahren nach einem der vorangehenden Ansprüche,
**dadurch gekennzeichnet,**
**dass** nachfolgend der Pyrolyse (56) eine Infiltration der Siliziumcarbid-Stützmatrix (21) mit Silizium erfolgt.

12. Verfahren nach einem der Ansprüche 1 bis 10,
**dadurch gekennzeichnet,**
**dass** nachfolgend der Pyrolyse eine Infiltration der Siliziumcarbid-Stützmatrix (21) mit Siliziumcarbid erfolgt

13. Verfahren nach Anspruch 12,
**dadurch gekennzeichnet,**
**dass** die Infiltration der Siliziumcarbid-Stützmatrix (21) mit Siliziumcarbid durch Abscheidung von Siliziumcarbid aus der Gasphase erfolgt.

14. Verfahren nach Anspruch 13,
**dadurch gekennzeichnet,**
**dass** die Abscheidung von Siliziumcarbid aus der Gasphase im CVI-und/oder CVD-Verfahren erfolgt.

15. Formkörper (22, 40) mit einer Siliziumcarbid-Stützmatrix (21) und einer integralen Kohlenstoffstruktur (23) mit einem auf Basis einer Siliziumcarbid oder Silizium und Kohlenstoff enthaltenden Pulvermischung (50) und eines Binders (51) in einem generativen Verfahren schichtweise aufgebauten Basiskörper,
wobei der Formkörper einen Kohlenstoffgehalt von 10 bis 30 Gew.-% aufweist.

16. Formkörper nach Anspruch 15,
**dadurch gekennzeichnet,**
**dass** das den Formkörper (22, 40) ausbildende Material einen spezifischen Widerstand zwischen 150 und 800 µOhmm aufweist.

17. Formkörper nach Anspruch 15,
**dadurch gekennzeichnet,**
**dass** das den Formkörper (22, 40) ausbildende Material einen spezifischen Widerstand zwischen 300 und 600 µOhmm aufweist.

18. Formkörper nach einem der Ansprüche 15 bis 17,
**gekennzeichnet durch**
einen schalenförmige Ausbildung.

19. Formkörper nach einem der Ansprüche 15 bis 17,
**gekennzeichnet durch**
eine Ausbildung als Gitterstruktur (45).

20. Formkörper nach einem der Ansprüche 15 bis 19,
**gekennzeichnet durch**
die Verwendung als Widerstandsheizelement.

21. Formkörper nach einem der Ansprüche 15 bis 19,
**gekennzeichnet durch**
die Verwendung als statischer Mischer.

22. Formkörper nach einem der Ansprüche 15 bis 19,
**gekennzeichnet durch**
die Verwendung als Lagerkörper.
